(19) Europäisches Patentamt
European Patent Office
Office européen des brevets

(11) EP 0 358 236 B1

(12) **EUROPEAN PATENT SPECIFICATION**

(45) Date of publication and mention of the grant of the patent: **29.12.1997 Bulletin 1997/52**

(51) Int Cl.$^6$: **G01N 21/89**, G06F 17/15

(21) Application number: **89116688.6**

(22) Date of filing: **08.09.1989**

(54) **Method of measuring period of surface defect**

Verfahren zur Messung der Periode eines Oberflächenfehlers

Méthode pour mesurer la périodicité d'un défaut superficiel

(84) Designated Contracting States:
**DE GB NL**

(30) Priority: **09.09.1988 JP 226190/88**

(43) Date of publication of application:
**14.03.1990 Bulletin 1990/11**

(73) Proprietor: **FUJI PHOTO FILM CO., LTD.**
**Kanagawa (JP)**

(72) Inventors:
- **Kiso,Takeshi c/o Fuji Photo Film Co., Ltd.**
  **Minami-Ashigara-shi Kanagawa (JP)**
- **Masuda, Takanori c/o Fuji Photo Film Co., Ltd.**
  **Kanbara-gun Shizuoka (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 316 961** **US-A- 4 134 684**

- **PATENT ABSTRACTS OF JAPAN, vol. 7, no. 278 (P-242)[1423], 10th December 1983; & JP-A-58 156 842 (TOKYO SHIBAURA DENKI) 17-09-1983**
- **PROCEEDINGS OF THE IEEE, vol. 68, no. 8, August 1980, pages 1024-1026, IEEE, New York, NY, US; L.F. ROCHA et al.: "Convolution and correlation using delta modulators"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 358 236 B1

Printed by Jouve, 75001 PARIS (FR)

## Description

The present invention relates to a method of measuring a period on which a surface defect appears in a traveling web,

Various types of surface inspecting apparatus for detecting surface defects of traveling webs, such as films, paper sheets, metal sheets, etc. are well known and widely used for quality control of the web.

Such a surface inspecting apparatus is used to detect surface defects, such as scratches and pin holes, of a surface of a traveling web appearing not only at random but also periodically. According to this periodic surface defect detecting system, surface defects are counted by opening a time gate at an elapse of a predetermined time period from a time a first surface defect is detected. After several times of this periodic detections, if more than a predetermined number of surface defects are detected every periodic detection, the web is estimated to have periodic surface defects.

In the above periodic surface defect detecting apparatus, because surface defects are counted for a predetermined time period starting at the time of a first detection of a surface defect, if a surface defect that is detected first is independent of the periodic surface defects, a period in which a surface defect appears periodically should be measured again. Therefore, it is hard to perform a real time measurement of a period in which a surface defect appears in a surface of a traveling web in a traveling web manufacturing line.

From US-A-4,134,684, a flaw detection system is known for detecting repeating defects occurring in a web which is divided into lanes for processing purposes. With respect to figure 3, the process for detecting flaws occurring in a single lane is explained. Upon the occurrence of a first flaw, its position is stored in a prefilter section of a computer. When the next succeeding flaw occurs in that lane, its separation distance to the first flaw is compared with a predetermined list of repeat defect sizes. This list of repeat defect sizes corresponds to the circumstances of rollers which convey the web. When a match occurs during the comparison, a post filter shift register is created in the computer indicating that further processing is desirable. The post filter projects a location or a selected tolerance window from the measured distance where the next flaw or defect should occur if it repeats. Further projection of windows based on an initial match are continued by either the distance from the occurrence of the last flaw within the window or from the center of a projected window in the event of a miss If three or more out of five sequenced locations containing defects are detected, an alarm is generated which may be used to stop the rollers.

From this prior art document, a flaw detection system is known for sensing surface flaws generated by more than two rolls of different diameters. A detection signal generated by a photo detector is stored in a register and subsequently in an image memory. The contents of the image memory are processed with a multiplier, an adder, a further register for operated values and a comperator to which a set value is applied. The processing is carried out in a manner that the flaw detection signal is autocorrelated in real time.

It has been proposed to perform the measuring of a period of appearance of a surface defect in a real time manner by the use of an autocorrelation. In this manner, a surface of a traveling web is divided into a plurality of data cells in a direction in which the web moves and each data cell is graded defective or non-defective. The defective data cell is signified by a binary data "1" and the non-defective data cell is signified by a binary data "0". Then, the number of pairs of defects at a regular distance of j is calculated for a data row consisting of binary data for the number of n data cells by the use of the following autocorrelation:

$$AC(j) = \sum_{i=1}^{n-j} (d_i \cdot d_{i+j}) \quad ..... \quad I$$

wherein j is an integer between zero (0) and (n - 1).

In the autocorrelation I, $(d_i \cdot d_{i+j})$ is a product of a binary data $d_i$ for an i-th data cell and a binary data $d_{i+j}$ for a (i + j)-th data cell. That is, the product is "1" only when both of the binary data $d_i$ and $d_{i+j}$ are "1" indicating both of the i-th data cell and (i + j)-th data cell are defective. Accordingly, the autocorrelation I expresses the number of pairs of defects at a regular distance of j for a data row consisting of binary data for the number of n data cells. Then, the following discrimination condition is used to determine a basic period of surface defect:

$$AC(f_o) > 0 \text{ AND } AC(2f_o) > 0 \text{ AND ... AND } AC(kf_o) > 0$$

wherein predetermined value K is an integer, and is related with the number of periodic defects of period $f_0$.

However, because of the necessity of calculating the autocorrelation I for all of the data, $d_i$, $d_2$, ....., $d_n$, a time required to perform the calculation is proportional to $n \cdot (n - 1)$. That is, multiplication and addition have to be repeated

n·(n - 1) times for the number of n of data. The number n is a value of a length L of the web for measurement divided by a unit length s.

Time necessary to perform calculation of elemental period of surface defects, which depends upon given hardware and program, is heretofore long and a high processing capacity of computer or a special hardware is needed to perform such a calculation in a real time manner.

It is the object of the present invention to provide a method of quickly measuring a period of surface defects without using a large computer or a specially provided hardware.

This object is accomplished by a method having the steps as recited in claim 1.

In order to detect surface defects, the surface of the traveling web is divided into a number of data cells and data of each data cell is expressed by means of a binary data "1" indicating a defective surface or a binary data "0" indicating non-defective or normal surface. After calculating distances of correlative locations among data cells having the defective surface data "1", the periodicity of these surface defects is decided by the use of an autocorrelation expressing a frequency of appearance of these distances. With the present invention, the time needed to calculate a period of surface defect is greately shortened in comparison with a manner using an autocorrelation resulting from performing a multiplication and an addition for all of the binary data. Therefore, the measurement of a period of surface defect can be effected in a real time manner without using a large computer or a specially provided hardware.

The measuring of the period of periodic defects is preferably effected every predetermined distance of movement of the web.

It is further preferred to measure the period of periodic defects for a plurality of lengthwise lanes having a predetermined width into which the surface of the traveling web is divided.

Figure 1 is a schematic illustration showing a system for measuring a period of surface defect embodying the present invention;
Figure 2 is an conceptional illustration showing a distribution of binary surface data and autocorrelation obtained from the distribution of binary surface data; and
Figure 3 is an illustration of output data as a result of measurement.

Referring to the drawings in detail, in particular to Fig. 1, the method of measuring a period of surface defect according to a preferred embodiment of the present invention which is applied to a lithographic plate manufacturing line is shown. An aluminum web 3 (which is hereinafter referred to as a base material) from which lithographic plates are made is rolled on a reel 2. The base material 3 is continuously withdrawn and transported towards a processing apparatus 5 by means of a drive roller 4. The processing apparatus 5 is provided with rollers 6 for polishing surfaces of the base material 3 so as to make them smooth. The base material 3 thus smoothed is transported by means of drive rollers 8 and a guide roller 9 and wound around a reel 10.

A flying spot type of surface scanning device, which is disposed between the drive roller 8 and guide roller 9, consists of a scanner 12 and a light detector 13. The scanner 12 scans a surface of the base material 3 in a transverse direction perpendicular to the moving direction of the base material with a small diameter of flying spot. The light modulated by surface defect is reflected from the surface of the base material 3 and directed towards the light detector 13. The light detector 13 detects the modulated light to provide a surface signal. As the scanner 12 scans the surface of the base material 3, it outputs scan signal to a lane data generator 14. The lane data generator 14 generates scanning lane signals SL indicating transverse positions or lanes of the surface of the base material 3 correspondingly to the surface signals from the detector 13. The scanning lane signals are sent to a binary signal generator 16.

The light detector 13 extends in parallel to the transverse direction of the base material 3 to receive the light modulated by and reflected from surface defects of the base material 3. Accordingly, if the surface of the base material 3 has no surface defects, surface signals produced by the light detector 13 are at levels lower than a certain signal level. On the other hand, if the base material 3 has surface defects, the light detector 13 produces surface signals at levels greater than the certain signal level.

A rotary encoder 17 is connected to the drive roller 8 to produce scanning cell position signals indicating cells on the base material 3 in the moving direction and send them to the binary signal generator 16.

The surface signals are sent to a binary signal generating circuit 16 and converted to binary signals, "0" or "1", according to their signal levels thereby. That is, if a surface signal from the light detector 13 is at a signal level lower than the certain signal level, the binary signal generator 16 produces a binary signal of "0" indicating a standard or normal surface of the base material 3 (which is referred to as a standard surface) and if a surface signal SS from the light detector 13 is at a signal level greater than the certain signal level, the binary signal generator 16 produces a binary signal of "1" indicating a significant defective surface of the base material 3 (which is referred to as a defective surface). The binary signal BS is sent as a surface data signal to the data processing unit 15.

Data processing unit 15 is connected to a data input unit 18, such as a keyboard, through which various data are input to set initial data necessary for measuring a period of surface defect. The initial data and the result of measurement

are displayed on a display 19, such as a CRT and, if necessary, printed out by means of a printer 20. The display 19 and the printer 20 can be of any well known type and need not be described in detail herein.

To measure a period of surface defect of the base material 3, data is initially input to divide the surface of the base material 3 into a number of data cells through the data input unit 18. This determines the number of data cells per unit distance s in the moving direction of the base material 3. Then, a length L of the base material 3 to be measured (which is referred to as a measuring length) is also initially set in accordance with a period of surface defect to be measured. It is to be noted in this embodiment that the measuring length L is set six times as long as an expected maximum period of surface defect.

After the initial setting, the surface scanning device is actuated to scan the surface of the base material 3. Surface signals SS from th-e light detector 13 of the surface scanning device are converted into binary signals BS; normal surface signals "0" or defective surface signals "1", which in turn are sent to the data processing unit 15.

Referring to Fig. 2 conceptually showing a distribution of binary signals BS corresponding to data cells of the base material 3, the base material 3 of the measuring length L is divided into a number of lanes, #1, #2, #3, ...... (three of which are shown in Fig. 2) along the moving direction and each lane is divided into a number of, for example 29, data cells having a width of a unit distance s in the measuring length L. As shown, each data cell of the base material 3 is assigned one binary signal BS.

The measurement of a period of surface defect in the No. 1 lane #1 will be exemplarily described with reference to Fig. 2. As apparent from Fig. 2, there are a number m of, for example 9, defective surface signals "1" in the No. 1 lane #1 in the measuring length L of the base material 3, which defective surface signals are correspondingly given to data of locations in the moving direction of cells having surface defects. When assigning the respective defective surface signals "1" $e_1$, $e_2$, ........, $e_9$ in order of appearance from the left as viewed in Fig. 2, a distance $l_{ij}$ between every two defective surface signals "1", which must be integral multiples of the width of s of a data cell, can be obtained. An autocorrelation AC(lij), which indicates a frequency at which two defective surface signals "1" at a same distance $l_{ij}$ appear, is given in accordance with the obtained distances $l_{ij}$.

In the case of performing this measurement for the measuring length L of the base material 3 by the use of the autocorrelation $AC(l_{ij})$, a maximum time necessary to calculate the autocorrelation $AC(l_{ij})$ for the number of m of defective surface signals "1" is proportional to m (m - 1) and, therefore, has a correlation to the number of defective surface signals. A maximum number of defective surface signals $M_{max}$ depends upon a minimum period of surface defect $x_{min}$ to be measured and given as follows:

$$M_{max} = \text{Measuring Length } L / X_{min}$$

It is noted that the autocorrelation $AC(l_{ij})$ thus obtained is equivalent to the conventional autocorrelation AC(j) as was previously described. The periodicity of this autocorrelation $AC(l_{ij})$ is discriminated by the following conditions:

$$AC(f_0) > 0 \text{ AND } AC(2 \cdot f_0) > 0 \text{ AND } \ldots\ldots, \text{ AND } AC(k \cdot f_0) > 0$$

where k is a predetermined value for indicating a maximum times period component $(k \cdot f_0)$ of fundamental period $f_0$ for discriminating the periodicity of the autocorrelation $AC(l_{ij})$.

The conditions are based on the fact that $AC(l_{ij})$ has a fundamental period component $f_0$ and 2 to k times period components of $f_0$ in the case that detected defects include periodic defects of period $f_0$ and the number of periodic defects is more than k. According to the conditions, a fundamental period $f_o$ is obtained.

As described above, because a time necessary to calculate the autocorrelation $AC(l_{ij})$ is proportional to $m \cdot (m - 1)$, the maximum time is proportional to $M_{max} \cdot (M_{max} - 1)$. Further, because the maximum number $M_{max}$ of defective surface signals depends upon the minimum period $X_{min}$ of surface defect and the minimum period $X_{min}$ is determined approximately 10 times as long as a unit distance s in the consideration of resolution in measurement, the maximum number $M_{max}$ of defective surface signals is expressed by using the total number of binary signals BS including normal surface and defective surface binary signals as follows:

$M_{max} \leqq$ Measuring Length (L)/10 Unit Distance (s) = n/10 In the case of the longest time necessary to calculate the elemental periods, a distance calculation (a subtraction of integers) and a frequency calculation (an addition of integers) are repeated $M_{max} \cdot (M_{max} - 1)$ times.

If using the conventional autocorrelation AC(j), it is necessary to repeat a multiplication and an addition of binary signals $n \cdot (n - 1)$ times. Although, in both cases, time necessary to perform calculation is different depending upon given hardware and program, a ratio of a total time necessary to calculate the autocorrelation $AC(l_{ij})$ in accordance with the present invention relative to a total time necessary to calculate the conventional autocorrelation AC(j) period is expressed by the following expression if assuming that the time necessary to perform calculation is the same in both cases,

$$M_{max}\ (M_{max} - 1)/[n\cdot(n - 1)]$$

$$= [n/10\ (n/10 - 1)]/n\cdot(n - 1) = 1/100\cdot[(n-10)/(n-1)]$$

$$\fallingdotseq 1/100$$

It is to be noted that the number n of data cells may be sufficient approximately more than 1,000, and is practically about 3,333. If in fact the number n is more than 1,000, the value of (n - 10)/(n - 1) is estimated one (1).

Accordingly, although a necessary time for calculating the autocorrelation $AC(l_{ij})$ according to the present invention depends upon the number m of defective surface signals "1" included in the number n of binary signals BS, the usage of the autocorrelation $AC(l_{ij})$ develops one hundredth of the total calculation time as short as that achieved by the usage of the conventional autocorrelation AC(j) even in the case of the longest total calculation time.

Detection of periodic surface defects is performed in the above described manner. If periodic surface defects are detected, the printer 20 is actuated to print out data of the detected periodic surface defects as shown in Fig. 3. Taking an example of a general lithographic plate manufacturing line in which the present invention is embodied and in which, a period (mimimum period $X_{min}$ - maximum period $X_{max}$) and the unit distance s are set to 100-8472mm, and 15mm, respectively. The base material 3, which usually has a maximum width of approximately 1,500mm, is divided into 15 lanes having a width of 100mm so as to form data collecting areas of 15 x 100mm in the base material 3. Accordingly, 15 bits of binary data are collected every 15mm of movement of the base material 3.

In the example of printed data shown in Fig. 3, data of first to seventh lanes of the base material 3 out of fifteen lanes are shown. Measurement of periodic surface defects is practically performed for the fifteen lanes every 50m of movement of the base material all at once. The maximum number of periodic surface defects is set to 500. A sequence is programmed so as not to perform the calculation of the autocorrelation upon a decision of no periodicity of surface defects. The decision that there is no periodicity among these surface defects is made when more than 500 surface defects are detected in a measuring length of 50m of the base material 3.

Although the measurement is effected every 50m advancement of the base material 3, a measured result is output every 100m movement of the base material 3 as shown in Fig. 3. Because periodic surface defects of the base material 3 in the lithographic plate manufacturing line are often caused by surface irregularities of the rollers 4, 8, 9 and/or 6, the measured result is, in this example shown in Fig. 3, numerically indicated by a value of a measured period of surface defect divided by the ratio of the circumferential to the diameter of a roller. In Fig. 3, the indication "274" indicates that the base material 3 has a periodic surface defect caused by a roller having a diameter of 274mm in the fifth lane (an area ranging from 400 to 500mm from the side edge of the base material 3) at a distance of 3000 to 3400m from the leading end of the base material 3.

## Claims

**1.** A method of measuring the period $f_0$ of any periodic defects on the surface of a web moving in a lengthwise direction, comprising the steps of:

a) obtaining a plurality m of defect signals, each representing the presence and position of a defect on said surface which are detected along a predetermined length (L) of said web in said lengthwise direction;

b) obtaining distance data representing the distance $l_{ij}$ between the i-th and j-th detected defects for all the detected defects along said predetermined length, where i = 1,2,...,m-1 and j = i + 1, i + 2,...m,

c) calculating auto-correlation $AC(l_{ij})$ representing the frequency at which pairs of defects occur at the distance $l_{ij}$ apart from each other; and

d) determining the presence and value of the period $f_0$ of any periodic defects, wherein said period is identified when the following condition is satisfied:

$$AC(f_0)>0 \text{ AND } AC(2\ f_0)>0,...,\text{AND } AC\ (K\ f_0)>0,$$

the period $f_0$ is between a predetermined minimum value Xmin and a predetermined maximum value Xmax, and K is a predetermined integer related with the number of periodic defects of period $f_0$.

2. A method according to claim 1, wherein measuring of the period $f_0$ is effected every predetermined distance of movement of said web (3).

3. A method according to claim 1 or 2, wherein said measuring of the period $f_0$ is effected for a plurality of lengthwise lanes having a predetermined width into which the surface of said web (3) is divided.

## Patentansprüche

1. Ein Verfahren zum Messen der Periode $f_0$ eines periodischen Defekts auf der Oberfläche eines Bandes, das sich in Längenrichtung bewegt, umfassend die Schritte:

   a) Erhalten einer Mehrzahl m an Defektsignalen, wobei jedes das Vorhandensein und die Position eines Defekts auf der Oberfläche, welche entlang einer vorbestimmten Länge (L) des Bandes in der Längsrichtung detektiert worden sind, repräsentiert;

   b) Erhalten von Abstandsdaten, welche den Abstand $l_{ij}$ zwischen dem i-ten und j-ten detektierten Defekt für alle detektierten Defekte entlang der vorbestimmten Länge repräsentieren, wobei i = 1, 2, ..., m-1 und j = i+1, i+2, ..., m,

   c) Berechnen der Autokorrelation $AC(l_{ij})$, welche die Frequenz darstellt, mit der Paare von Defekten mit einem Abstand $l_{ij}$ voneinander entfernt auftreten; und

   d) Bestimmen des Vorhandenseins und des Werts der Periode $f_0$ eines periodischen Defekts, wobei die Periode identifiziert wird, wenn die folgende Bedingung erfüllt ist:

$$AC(f_0) > 0 \text{ UND } AC(2\,f_0) > 0, ..., \text{ UND } AC\,(K\,f_0) > 0,$$

   die Periode $f_0$ zwischen einem vorbestimmten minimalen Wert $X_{min}$ und einem vorbestimmten maximalen Wert $X_{max}$ liegt, und K eine vorbestimmte Integerzahl ist, die mit der Anzahl der periodischen Defekte der Periode $f_0$ in bezug steht.

2. Ein Verfahren nach Anspruch 1, in welchem das Messen der Periode $f_0$ jeden vorbestimmten Abstand der Bewegung des Bands (3) ausgeführt wird.

3. Ein Verfahren nach Anspruch 1 oder 2, in welchem das Messen der Periode $f_0$ für eine Mehrzahl von Längsspuren ausgeführt wird, die eine vorbestimmte Breite aufweisen, in welche die Oberfläche des Bandes (3) geteilt worden ist.

## Revendications

1. Procédé de mesure de la période $f_0$ de défauts périodiques sur la surface d'une bande mobile dans une direction longitudinale, comprenant les étapes :

   a) d'obtention de plusieurs, m, signaux de défaut, chacun représentant la présence et la position d'un défaut sur ladite surface, qui sont détectés sur une longueur prédéterminée (L) de ladite bande dans ladite direction longitudinale ;
   b) d'obtention d'une donnée de distance représentant la distance $l_{ij}$ entre les $i^{ème}$ et $j^{ème}$ défauts détectés pour tous les défauts détectés sur ladite longueur prédéterminée, où i = 1, 2, ..., m-1 et j = i + 1, i + 2, ..., m ;
   c) de calcul d'une autocorrélation $AC(l_{ij})$ représentant la fréquence à laquelle apparaissent des paires de défauts séparés l'un de l'autre par la distance $l_{ij}$ ; et
   d) de détermination de la présence et de la valeur de la période $f_0$ de défauts périodiques, dans lequel on identifie ladite période lorsque la condition suivante est satisfaite :

$$AC(f_0) > 0 \text{ et } AC(2\,f_0) > 0, ..., \text{ et } AC\,(K\,f_0) > 0\ ;$$

la période $f_0$ se trouvant entre une valeur minimale prédéterminée Xmin et une valeur maximale prédéterminée Xmax, et K étant un nombre entier prédéterminé lié au nombre de défauts périodiques de période $f_0$.

**2.** Procédé selon la revendication 1, dans lequel la mesure de la période $f_0$ s'effectue à chaque distance prédéterminée de déplacement de ladite bande (3).

**3.** Procédé selon la revendication 1 ou 2, dans lequel ladite mesure de la période $f_0$ s'effectue pour plusieurs couloirs ayant une largeur prédéterminée en lesquels la surface de ladite bande (3) est divisée.

FIG. 1

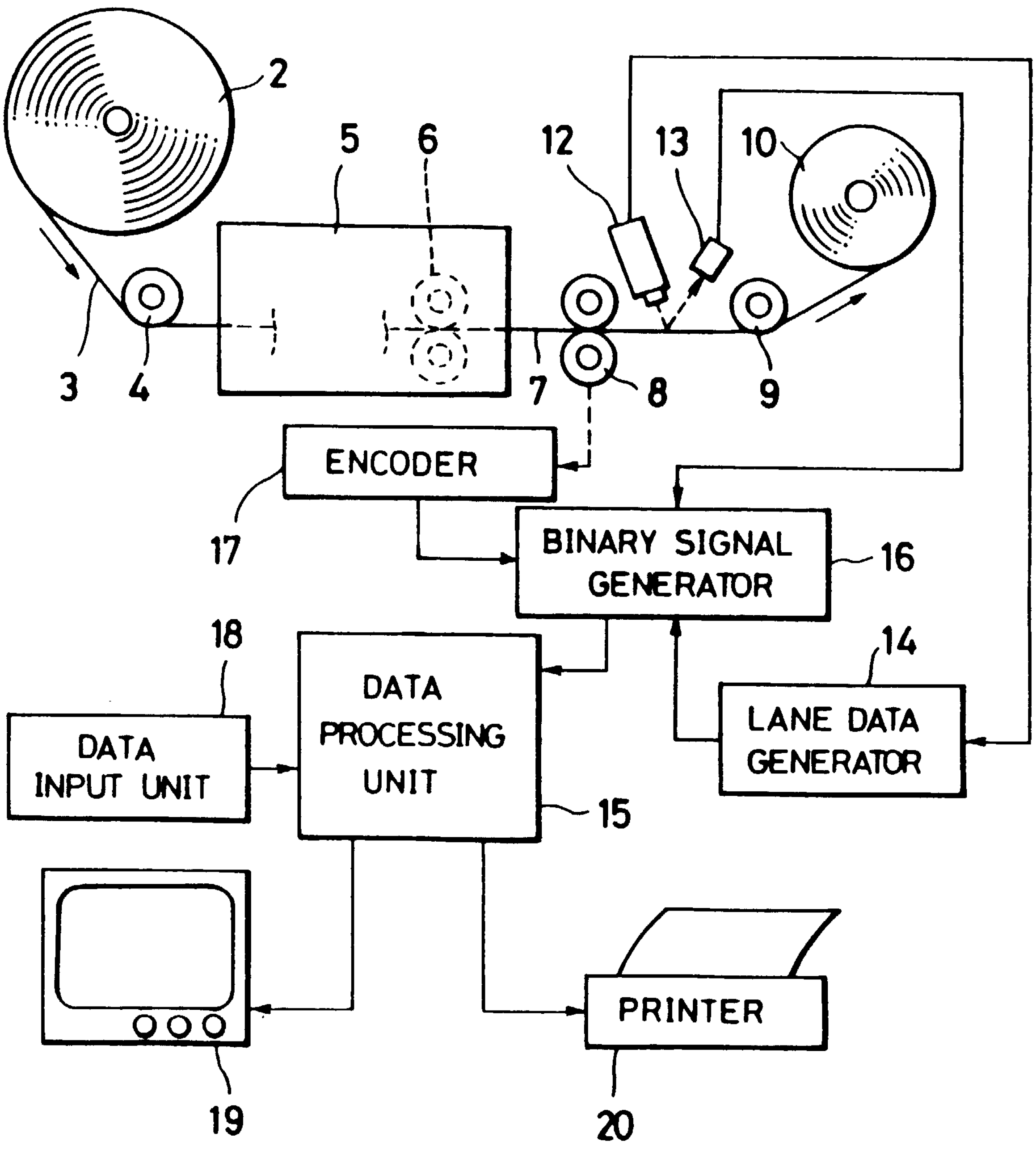
2
5
6
12
13
10
3
4
7
8
9
ENCODER
17
BINARY SIGNAL GENERATOR
16
18
14
DATA PROCESSING UNIT
LANE DATA GENERATOR
DATA INPUT UNIT
15
PRINTER
19
20

F I G. 2

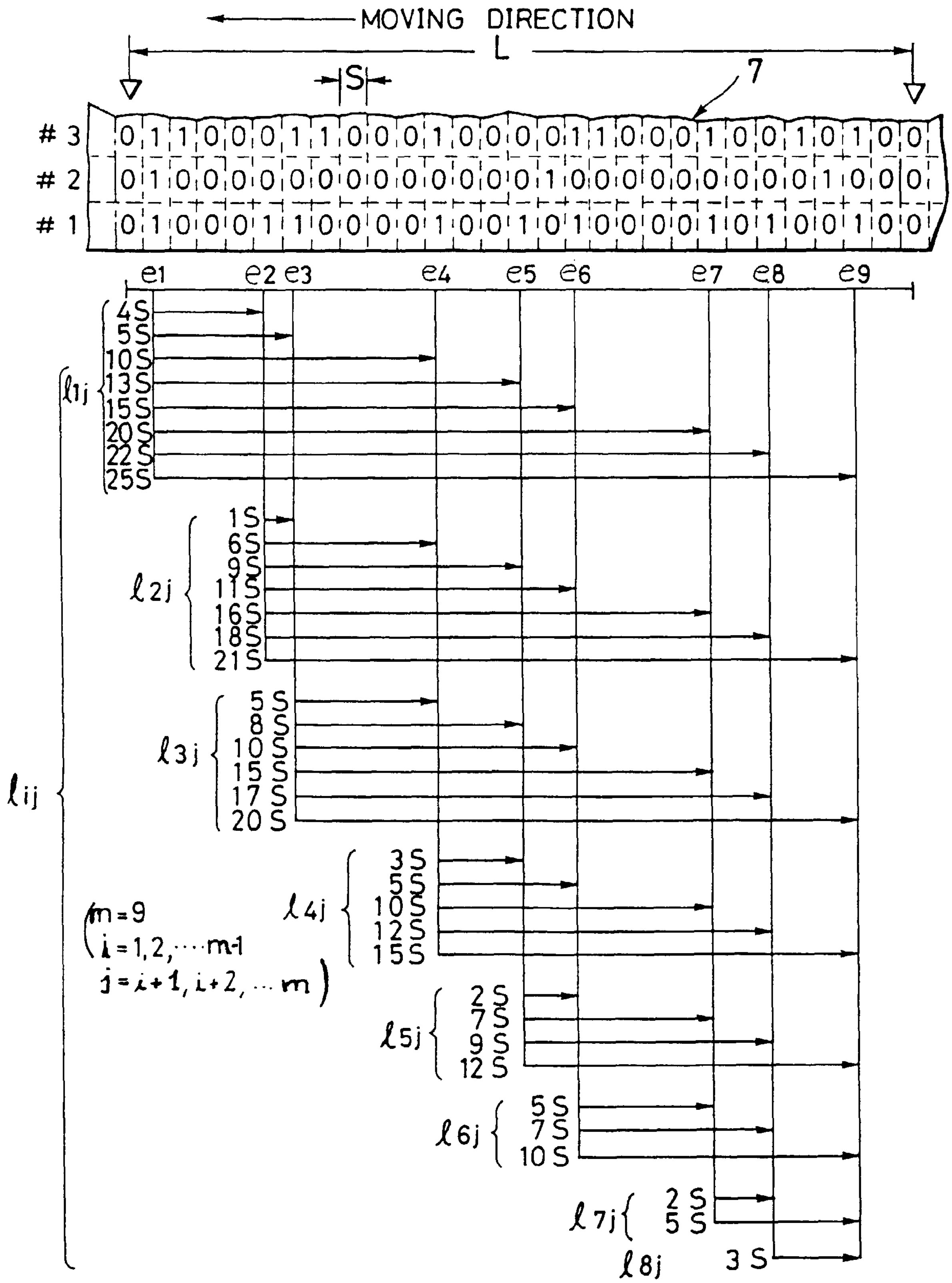
MOVING DIRECTION
L
S
7
# 3
# 2
# 1
0 1 1 0 0 0 1 1 0 0 0 1 0 0 0 0 1 1 0 0 0 1 0 0 1 0 1 0 0
0 1 0 0 0 0 0 0 0 0 0 0 0 0 0 1 0 0 0 0 0 0 0 0 0 1 0 0 0
0 1 0 0 0 1 1 0 0 0 0 1 0 0 1 0 1 0 0 0 0 1 0 1 0 0 1 0 0
e1 e2 e3 e4 e5 e6 e7 e8 e9
l1j 4S 5S 10S 13S 15S 20S 22S 25S
l2j 1S 6S 9S 11S 16S 18S 21S
l3j 5 S 8 S 10 S 15 S 17 S 20 S
l4j 3S 5S 10S 12S 15S
l5j 2 S 7 S 9 S 12 S
l6j 5 S 7 S 10 S
l7j 2 S 5 S
l8j 3 S
lij
(m=9
i=1,2,···m-1
j=i+1, i+2, ··· m)

FIG. 3

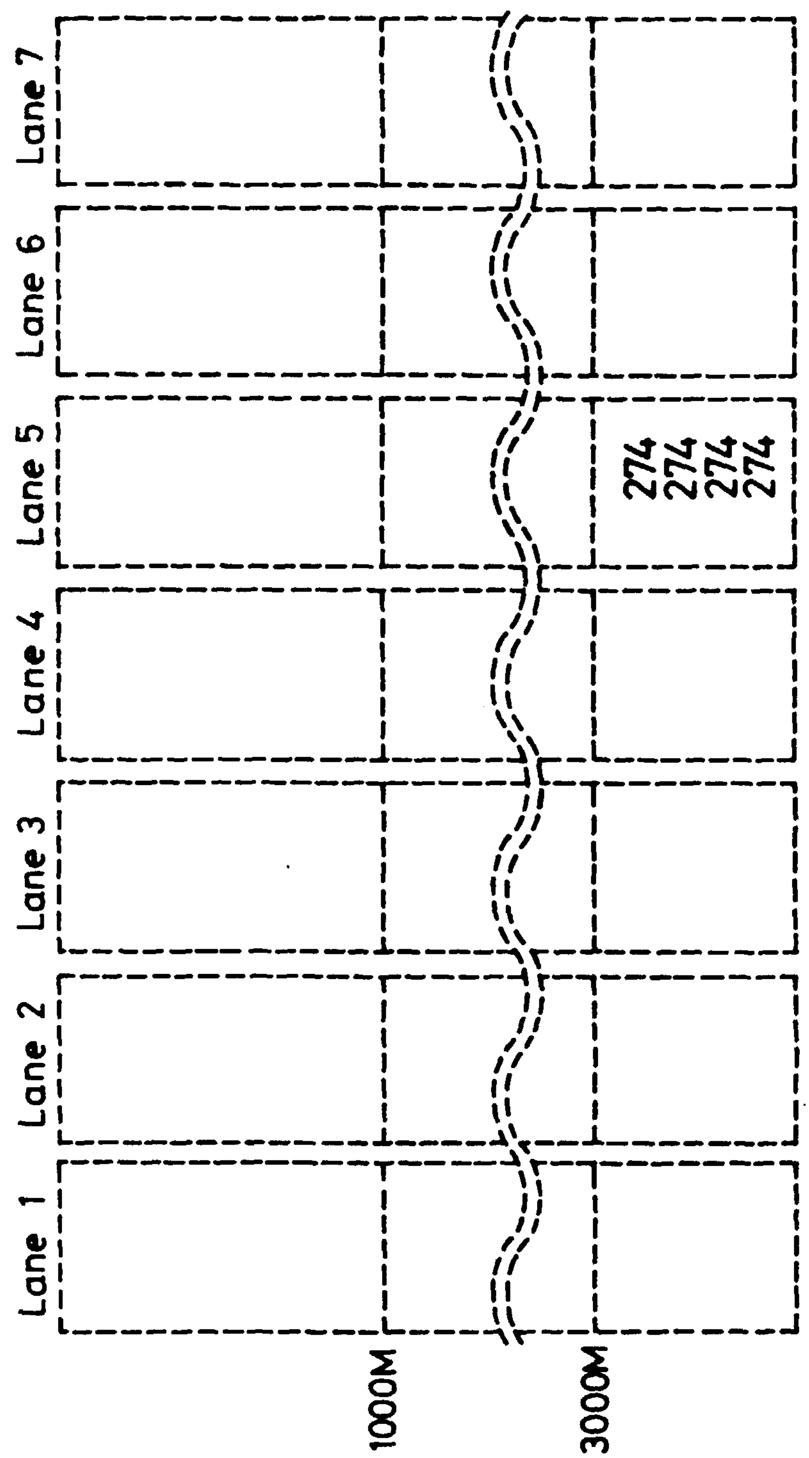
Lane 1
Lane 2
Lane 3
Lane 4
Lane 5
Lane 6
Lane 7
1000M
3000M
274
274
274
274